Europäisches Patentamt

European Patent Office

Office européen des brevets

(19)

(11) Numéro de publication: **0 127 546**
**B1**

(12) **FASCICULE DE BREVET EUROPEEN**

(45) Date de publication du fascicule du brevet: **18.01.89**

(51) Int. Cl.⁴: **B 29 C 45/14**

(21) Numéro de dépôt: **84401088.4**

(22) Date de dépôt: **28.05.84**

(54) Procédé et dispositif de fabrication de vitrages surmoulés et produits obtenus.

(30) Priorité: **30.05.83 FR 8308903**

(43) Date de publication de la demande:
**05.12.84 Bulletin 84/49**

(45) Mention de la délivrance du brevet:
**18.01.89 Bulletin 89/03**

(84) Etats contractants désignés:
**AT BE DE FR GB IT LU NL SE**

(56) Documents cités:
**FR-A-1 374 552**
**FR-A-2 157 189**
**FR-A-2 393 663**
**US-A-2 559 861**
**US-A-2 718 664**
**US-A-4 336 009**

(73) Titulaire: **SAINT-GOBAIN VITRAGE**
**Les Miroirs 18, avenue d'Alsace**
**F-92400 Courbevoie (FR)**

(72) Inventeur: **Zanella, Guy Emile Arthur**
**30 rue Maurice Ravel**
**F-73160 Cognin (FR)**
Inventeur: **Girard, Philippe**
**5 rue Saint-Thomas**
**F-27000 Evreux (FR)**

(74) Mandataire: **Muller, René et al**
**SAINT-GOBAIN RECHERCHE 39, quai Lucien**
**Lefranc**
**F-93304 Aubervilliers (FR)**

Courier Press, Leamington Spa, England.

## Description

La présente invention concerne la préparation de vitrages pour véhicules automobiles, afin de constituer des ensembles plurifonctionnels s'intégrant dans les carrosseries.

La préparation d'ensembles plurifonctionnels consiste à ajouter un ou plusieurs éléments fonctionnels, au moins sur une partie de la périphérie des vitrages afin de constituer des ensembles s'intégrant à la carrosserie d'un véhicule automobile et ouvre simultanément la porte à de nombreuses applications: dans le cas du pare-brise: on peut ajouter un joint en caoutchouc sur toute sa périphérie, ce qui permet de le fixer directement par collage dans la baie de la carrosserie. En procédant ainsi, le vitrage peut être mis en place à fleur de carrosserie, et le coefficient de pénétration dans l'air des véhicules en est grandement amélioré. Dans le cas d'un vitrage latéral, on peut ajouter un montant de portière, voire une porte entière, afin de constituer un ensemble vitré que l'on assemble directement au reste de la carrosserie sur la chaîne de montage. De même, on peut former un hayon incluant la lunette arrière. Toutes ces possibilités d'utilisation d'ensembles plurifonctionnels dans le domaine de l'automobile présentent l'avantage de supprimer de nombreuses opérations sur la chaîne de montage, et par conséquent d'augmenter considérablement la cadence de production.

Une technique connue, appelée technique du surmoulage, permet d'ajouter un ou plusieurs éléments sur au moins une partie de la périphérie d'un objet. Cet ajout se fait par exemple par injection ou extrusion sous haute pression d'une matière plastique polymérisable sur la périphérie de l'objet à surmouler.

Un dispositif correspondant à cette technique est décrit par exemple dans le brevet US—A—4 336 009. Ce brevet décrit un moule convenant pour le surmoulage d'un objet tel que un disque, une plaque ou un anneau, par injection ou extrusion. Il décrit également des moyens pour définir la limite du surmoulage, ces moyens étant constitués par des encoches profilées formées dans les plateaux du moule. En raison des pressions élevées d'injection de la matière plastique, il est connu que les objets à surmouler doivent présenter une bonne résistance mécanique.

La demanderesse a eu l'idée d'utiliser cette technique connue pour l'appliquer à la préparation d'ensembles plurifonctionnels comprenant un vitrage.

Elle connaissait un autre mode de réalisation de cette technique, sans que ce mode de réalisation soit publié dans un document de brevet. Selon ce mode de réalisation est réalisé le surmoulage d'un objet quelconque selon un procédé ayant les caractéristiques du préambule de la revendication 1 et utilisant un dispositif ayant les caractéristiques du préambule de la revendication 11.

La demanderesse a réalisé, selon cette technique, des essais avec du verre en tant qu'objet à surmouler. Il s'est avéré que, si cette technique est bien au point pour des objets présentant des propriétés mécaniques adaptées, des problèmes se posent lors de son application à des objets particulièrement fragiles comme le verre, et notamment des vitrages bombés. Il semblerait pourtant que le verre trempé, en raison de son excellente résistance aux chocs aussi bien mécaniques que thermiques, se prête particulièrement bien au surmoulage.

La demanderesse s'est en particulier heurtée à la conciliation de deux impératifs: maintenir fermement l'objet entre ces plateaux afin qu'il ne se déplace pas, tout en évitant les risques de casse de l'objet; injecter la matière plastique uniquement sur une zone préalablement délimitée sans provoquer de débordements ou de bavures.

Dans le cas de matières non fragiles, il suffit, pour assurer le serrage, de prévoir, comme indiqué précédemment, des bossages métalliques dans la structure du moule, qui viendront pincer l'élément que l'on souhaite surmouler. Mais pour les vitrages bombés en verre, issus d'une même série qui présentent inévitablement des différences de courbure d'un vitrage à l'autre, l'utilisation d'éléments rigides peut provoquer des contraintes inacceptables entraînant des bris de vitrage. En outre, au moment de la mise en place du vitrage entre les plateaux du moule, il peut y avoir un glissement longitudinal entre l'élément de serrage et le verre, ce glissement ne doit pas provoquer de rayures sur le verre.

Enfin, la matière constitutive de l'élément de serrage qui se trouve en contact d'une part avec le verre, d'autre part avec la matière d'injection doit être compatible avec ladite matière, et notamment ne pas adhérer avec elle; il doit présenter de bonnes qualités de résistance mécanique à chaud, pour résister à la température d'injection de la matière injectée.

Mais, par ailleurs, s'il est exclu d'employer un élément de serrage trop rigide, il n'est pas non plus recommandé d'en employer un trop mou. Il est en effet nécessaire d'éviter, lors de l'injection de la matière plastique, et sous l'effet de la pression d'injection, des débordements au delà de la zone que l'on s'est fixée. Ceci explique également pourquoi le joint torique d'étanchéité ne suffit pas pour le résultat souhaité: il doit être relativement mou pour remplir sa fonction d'étanchéité et ne peut par conséquent ni serrer suffisamment le vitrage pour empêcher qu'il ne se déplace, ni résister à la pression de la matière injectée.

L'invention propose un procédé de surmoulage par injection de matière plastique polymérisable sous pression, qui répond au problème posé lors de son application au surmoulage de vitrages bombés, grâce à l'introduction d'un joint supplémentaire, servant à déterminer la limite du surmoulage, disposé dans un logement prévu à cet effet dans les plateaux du moule, ce joint supplémentaire présentant une élasticité dans une direction sensiblement perpendiculaire à la surface du vitrage pour absorber les variations de forme ou de courbure du vitrage, tout en présentant une rigidité suffisante pour supporter la pression d'injection. Après polymérisation, on écarte les plateaux et on retire le vitrage surmoulé du moule.

Pour la mise en oeuvre de ce procédé le dispositif selon l'invention est caractérisé en ce qu'il est prévu pour la fabrication de vitrages bombés, notamment pour véhicules automobiles, et en ce qu'il comprend un joint supplémentaire logé dans le moule, suffisamment elastique dans une direction sensiblement perpendiculaire au vitrage pour absorber les éventuelles variations de forme du vitrage, et suffisamment rigide pour definir la limite du surmoulage et supporter la pression d'injection de la matière plastique, sans risque de rayure ou de rupture duclit vitrage.

Sons un des aspects de l'invention, le joint supplémentaire est un joint formé de deux parties moulées au préalable dans un moule distinct puis mis en place dans les logements prévus à cet effet dans chacun des deux plateaux du moule.

Sous un autre aspect de l'invention, le joint est un joint souple dont la souplesse permet d'amortir les écarts de courbure qui peuvent exister d'un vitrage à l'autre, sans risque de rupture dudit vitrage. On choisit à cet effet de préférence un joint en élastomère polyuréthane qui présente en particular d'excellentes qualités de résistance mécanique jusqu'à des températures de l'ordre de 230 à 290°C nécessaires dans certains cas au surmoulage.

Avantageusement, on choisit un joint dont la dureté shore A est comprise entre 65 et 95 environ, et de préférence comprise entre 80 et 90. Cette gamme de dureté garantit un très bon compromis pour satisfaire les exigences contradictoires de souplesse et de résistance. En effet, lorsque le joint présente une dureté shore inférieure à 65, il peut se déformer sous la poussée de la matière au cours de l'injection et il s'en suit des bavures et/ou une bordure mal définie pour la matière de surmoulage. Par contre, lorsque le joint présente une dureté shore A supérieure à 95 on retrouve les inconvénients d'un joint métallique rigide avec les bris de vitrages qu'il peut entrainer.

Outre la dureté de la matière qui forme essentiellement le joint, la forme du joint et de son logement dans le moule peuvent être choisies de façon préférée dans le procédé selon l'invention. Il faut en effet éviter, d'une part un émiettement du joint au cours des opérations successives de pressage, et d'autre part des accumulations préférentielles de matière plastique au cours de l'injection. En particulier, une forme bombée de la portion du joint de serrage qui émerge du logement dans lequel il est inséré dans le moule conduirait à une usure prématurée du joint. Par contre, il s'est révélé avantageux de donner à cette portion une dépouille, c'est-à-dire de procéder à une diminution symétrique de sa section, ce qui permet son écrasement élastique, supprimant ainsi les risques d'émiettement et d'usure prématurée du joint.

Pour améliorer encore le comportement du joint, et lui faire remplir sa fonction de joint de serrage dans les conditions optimales, on peut faire en sorte qu'avant le pressage des deux plateaux du moule contre le vitrage, il subsiste un certain jeu entre le joint et son logement, au niveau de la partie enfoncée dans le moule. On évite ainsi de trop importantes déformations de la partie émergente du joint.

Sous un autre aspect de l'invention, le joint est un joint plus rigide, par exemple en métal revêtu, sur sa face en contact avec le verre des deux côté, d'une bande qui ne raye pas le verre, par exemple en téflon, à condition d'interposer entre ledit joint et son logement dans le moule, des ressorts permettant d'absorber la variation de forme des vitrages sans risque de bris. La matière utilisée répond aux exigences formulées à l'égard du verre, notamment d'autoriser au cours de la mise en place du vitrage dans le moule un glissement sans rayure de la surface du verre.

Sous un aspect supplémentaire, le joint comprend une partie sous forme d'une surépaisseur de métal revêtu de téflon déposée sur l'un des plateaux du moule, et un joint souple dans un logement ménagé dans l'autre plateau.

Dans une autre variante, le joint supplémentaire en deux parties comprend une surépaisseur de métal recouvert de téflon sur l'un des plateaux du moule, et dans l'autre plateau, un joint métallique, recouvert d'une couche de téflon est associé à un ressort.

Dans une variante supplémentaire, on associe un joint souple et un insert métallique, l'insert métallique étant du côté du joint en contact avec la matière de surmoulage.

La couche de téflon est déposée par exemple par pulvérisation.

Ce mode de réalisation permet avantageusement d'associer les effets d'un joint souple et d'un joint plus rigide en vue d'obtenir un profil de surmoulage parfaitement rigoureux et exempt de bavures.

L'invention concerne également un dispositif pour la mise en oeuvre du procédé, ce dispositif comprenant deux plateaux formant un moule, les deux plateaux étant espacés l'un de l'autre dans leur partie centrale reliée à un système annexe permettant d'y faire le vide, afin de maintenir le vitrage à surmouler, ces plateaux comportant un joint d'étanchéité et un joint supplémentaire suffisamment souple pour absorber les éventuelles variations de forme dudit vitrage, et suffisamment rigide pour déterminer la limite du surmoulage, supporter la pression et la température d'injection, sans risque de rayure ou de rupture dudit vitrage.

D'autres caractéristiques et avantages de l'invention apparaitront au cours de la description suivante, en référence avec les figures annexées 1 à 9 de différents modes de réalisation:

La figure 1 représente une vue en coupe d'un vitrage à l'intérieur d'un dispositif de surmoulage pour la mise en oeuvre du procédé selon l'invention.

La figure 2 est une vue de détail d'un exemple de joint selon l'invention.

La figure 3 représente le joint de la figure 2 durant l'opération de surmoulage.

Les figures 4 et 5 représentent des variantes du joint de la figure 2, et de son logement dans les plateaux du moule.

Les figures 6 à 9 représentent d'autres modes de réalisation de moules comportant des éléments de serrage selon l'invention.

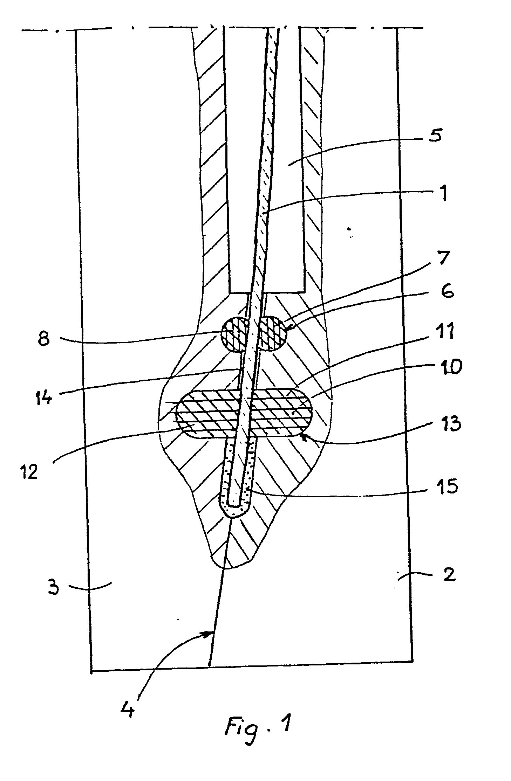

Dans le dispositif illustré à la figure 1, le vitrage 1 est maintenu entre les deux plateaux métalliques 2 et 3 formant un moule et délimitant un plan de joint 4. Il est, pour des raisons de commodité, placé verticalement et maintenu grâce à un système faisant le vide dans la partie centrale 5 du moule limitée par un joint torique 6 d'étanchéité formé des deux parties 7 et 8 logé dans les plateaux du moule. Un joint de serrage 10 conforme à l'invention, formé de deux parties 11 et 12, destiné aussi à limiter l'injection de la matière de surmoulage, est mis en place dans un logement 13 prévu à cet effet sur chaque plateau du moule. Les parties des deux plateaux du moule correspondant aux parties non surmoulées du vitrage ne sont pas aux contact du vitrage. Il subsiste entre les faces de celui-ci et les plateaux du moule un espace 14 suffisant pour éviter tout contact risquant d'entrainer des bris de vitrage.

Le moule peut être légèrement chauffé ou non au moment de l'injection de la matière de surmoulage 15. Toutes sortes de matières, présentant des compositions, des couleurs, ou des duretés différentes peuvent être injectées, suivant les propriétés souhaitées dans les applications envisagées. Ainsi, on utilise couramment pour l'injection, du polystyrène, polyéthylène basse densité et haute densité, polypropylène, des polyamides, du polychlorure de vinyle, polyuréthane, etc. . . Ces matières de base peuvent en outre être renforcées de fibres de verre, et/ou de charges autres. La coloration est indifférente, elle ne répond qu'à un souci d'esthétisme.

Dans le cas toutefois où le joint est un élastomère de polyuréthane, il est préférable d'injecter une matière autre que du polyuréthane, afin d'éviter les risques d'adhérence du joint à la matière injectée.

De préférence, on utilisera un vitrage trempé, plus résistant, mais l'invention peut également s'appliquer à des vitrages feuilletés ou durcis, à condition d'avoir des températures et pressions compatibles avec la résistance des vitrages.

On fait le vide dans la partie centrale 5, le joint torique 6 assurant l'étanchéité, puis on procède à l'injection de la matière de surmoulage 15 par un conduit non représenté prévu dans la structure du moule.

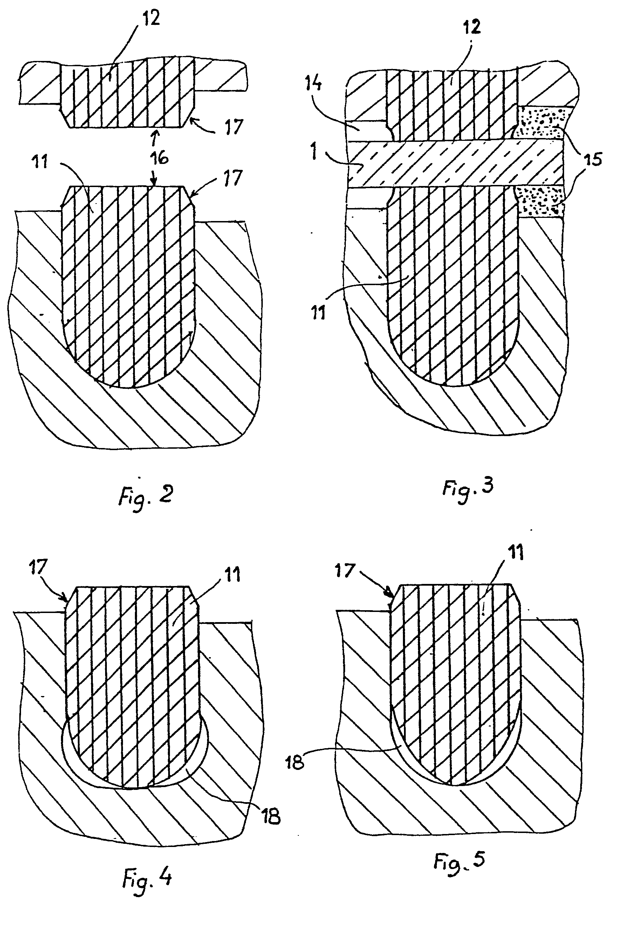

La figure 2 représente les deux parties 11 et 12 du joint 10 dans leur logements prévus dans les deux plateaux 2 et 3 maintenus espacés du moule. L'extrémité 16 de la partie émergente du joint présente une dépouille 17.

La figure 3 représente le joint 10 lors du surmoulage. Les deux parties 11 et 12 sont appliquées contre les deux faces du vitrage 1. Sous l'effort les extrémités du joint sont écrasées. Le joint maintient le vitrage et limite l'expansion de la matière plastique injectée 15.

Les figures 4 et 5 représentent des variantes dans lesquels il est prévu un espace 18 ou jeu latéral entre la base du joint et le logement 13 ce qui permet un écrasement élastique du joint au cours du surmoulage.

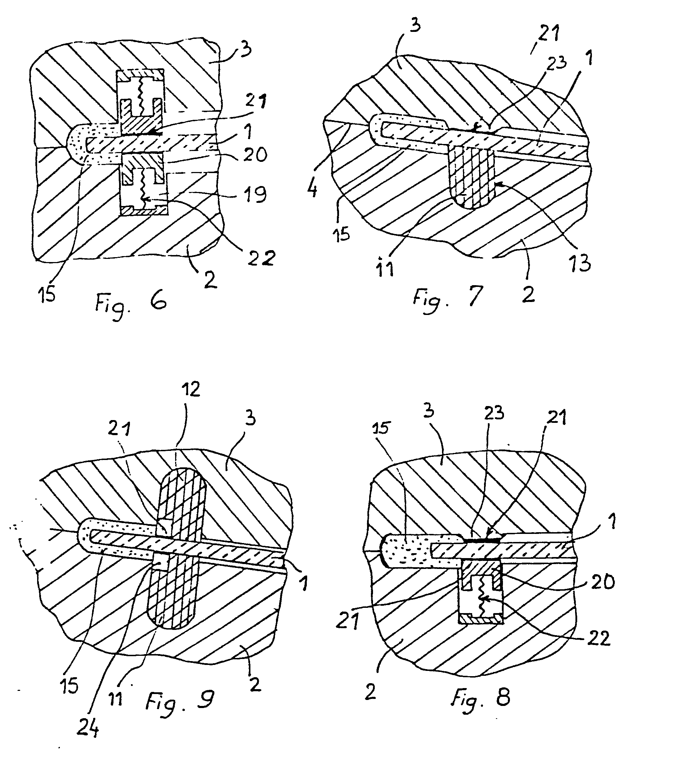

La figure 6 représente de façon très schématique une coupe des plateaux 2 et 3 d'un moule, dans lesquels une gorge 19 a été ménagée pour servir de logement à un joint métallique 20 recouvert d'une couche de téflon 21 associé à des ressorts 22 destinés à assurer la souplesse souhaitée.

La figure 7 représente une autre variante des plateaux d'un moule: le vitrage 1 est maintenu entre les plateaux 2 et 3 délimitant un plan de joint 4. Pour des raisons de simplification, on a représenté uniquement la partie du moule où se fait le surmoulage de la matière 15.

Le plateau 3 du moule présente une surépaisseur 23 de métal recouvert de téflon 21. Le plateau 2 comprend un joint souple 11 par exemple en polyuréthane. On exerce des forces de serrage plus importantes du côté du joint souple 11 tout en prenant appui de l'autre côté sur la surépaisseur 23.

Dans la variante de la figure 8, on a associé la surépaisseur métallique 23 recouverte de téflon 21 comme dans la figure 7, et le joint rigide 20 combiné au ressort 22 comme dans la figure 6.

Dans la variante de la figure 9, on a associé un insert métallique 24 recouvert d'une couche de téflon 21 sur la face au contact du vitrage à un joint souple en polyuréthane 11 et 12. Cette variante offre l'avantage de combiner l'élasticité du polyuréthane pour absorber les variations de forme du vitrage et la dureté du métal pour supporter la pression d'injection de la matière à surmouler. En outre, elle autorise l'injection de polyuréthane puisqu'il n'y a plus de contact direct entre la matière injectée et le joint souple.

Exemple 1

On se propose de fabriquer un pare-brise muni d'un cordon périphérique thermoplastique.

A cet effet, un vitrage trempé est maintenu dans un moule en acier, son serrage dans le moule étant assuré au moyen du joint représenté dans son logement dans la figure 9. Le joint a été préalablement préparé par mélange, puis coulé dans un moule et polymérisé, pour l'obtention d'un polyuréthane dont la dureté shore est de 90. On lui adjoint un insert métallique.

La matière de surmoulage est un polyuréthane thermoplastique injecté à une température de 210°C sous une pression de 90 bars.

Après démoulage, le pare-brise intact est muni du cordon périphérique pour lequel les bordures sont parfaitement définies.

### Exemple 2

On se propose de fabriquer un hayon pour véhicule automobile.

Les conditions générales de mise en oeuvre du procédé demeurent identiques, la limite de surmoulage étant cette fois définie par le joint représenté aux figures 2 et 3; la dépouille 17 qui lui a été donnée réduit les effets de la pression de la matière plastique injectée; toutefois en raison de la nature du produit que l'on souhaite obtenir, on utilise une matière de surmoulage autre, à savoir du polybutylènetéréphtalate, ce qui permet de mettre en évidence les excellentes propriétés de résistance mécanique et thermique du joint. Le joint supporte cette fois une température de 240°C et une pression de 70 bars.

Le produit obtenu après démoulage présente un aspect tout à fait satisfaisant.

### Revendications

1. Procédé de surmoulage d'un objet par injection de matière plastique polymérisable sous pression sur au moins une partie de la périphérie de l'objet, dans lequel on place un objet dans un moule comprenant deux plateaux (2, 3) délimitant un plan de joint (4), et dont une partie (5) sous vide limitée par un joint d'étanchéité (6) permet un maintien de la partie centrale de l'objet, on réunit les deux plateaux, on injecte la matière plastique, et après polymérisation, on sépare les plateaux et on retire l'objet surmoulé du moule, caractérisé en ce que le procédé est appliqué à un vitrage bombé (1), notamment pour véhicules automobiles, un joint supplémentaire (10) définit la limite du surmoulage, ledit joint supplémentaire étant logé dans les plateaux du moule et présentant une élasticité dans une direction sensiblement perpendiculaire au vitrage pour absorber les variations de courbure dudit vitrage (1), tout en présentant une rigidité suffisante pour supporter la pression d'injection de la matière plastique.

2. Procédé selon la revendication 1, caractérisé en ce que le joint supplémentaire (10) est un joint en deux parties (11, 12) moulées au préalable dans un moule distinct puis placé dans des logements (13) prévus à cet effet dans les plateaux (2, 3) du moule.

3. Procédé selon la revendication 2, caractérisé en ce que le joint supplémentaire (10) est un joint souple ayant une dureté shore (A) comprise entre 65 et 95.

4. Procédé selon la revendication 3, caractérisé en ce que le joint souple est un élastomère thermodurcissable de polyuréthane.

5. Procédé selon la revendication 4, caractérisé en ce que le joint souple a une dureté shore A de 80.

6. Procédé selon l'une des revendications 2 à 5, caractérisé en ce que la portion de joint supplémentaire (10) qui émerge du logement (13) dans lequel le joint est inséré dans le moule présente une dépouille (17).

7. Procédé selon l'une des revendications 2 à 6, caractérisé en ce que, avant le pressage des deux plateaux (2, 3) contre le vitrage (1), on maintient un certain jeu entre le joint supplémentaire souple (10) et son logement (13) dans le moule.

8. Procédé selon l'une des revendications 1 ou 2, caractérisé en ce que le joint supplémentaire (10) est en métal recouvert de téflon (21), et en ce qu'on interpose des ressorts (22) entre ledit joint et son logement dans le moule.

9. Procédé selon l'une des revendications 2 à 7, caractérisé en ce qu'on adjoint au joint souple (11, 12) un insert métallique (24), disposé du côté du joint en contact avec la matière de surmoulage.

10. Procédé selon la revendication 1, caractérisé en ce qu'on dépose une surépaisseur (23) de métal recouvert de téflon (21) sur un des plateaux du moule, l'autre plateau comprenant un joint souple (11) dans un logement (13) et on exerce une force de serrage plus importante du côté du joint (11).

11. Dispositif pour la mise en oeuvre du procédé selon une des revendications 1 à 10, comprenant deux plateaux (2, 3) formant un moule et délimitant un plan de joint (4), une zone intermédiaire et une zone centrale (5), les deux plateaux étant espacés l'un de l'autre dans leur zone centrale (5) reliée à un système annexe permettant d'y faire le vide, un joint (6) pour assurer l'étanchéité entre la zone intermédiaire et la zone centrale, caractérisé en ce que le dispositif est prévu pour la fabrication de vitrages bombés notamment pour véhicules automobiles, et en ce qu'il comprend un joint supplémentaire (10) logé dans le moule, suffisamment élastique dans une direction sensiblement perpendiculaire au vitrage pour absorber les éventuelles variations de forme du vitrage, et suffisamment rigide pour définir la limite de surmoulage et supporter la pression d'injection de la matière plastique, sans risque de rayure ou de rupture dudit vitrage.

12. Vitrages bombés surmoulés obtenus par la mise en oeuvre du procédé selon l'une des revendications 1 à 10 où à l'aide du dispositif selon la revendication 11.

### Patentansprüche

1. Verfahren zum Umgießen eines Gegenstandes durch Druckspritzen eines polymerisierbaren Kunststoffs auf mindestens einen Teil des Umfangs des Gegenstandes, bei welchem ein Gegenstand in eine Form gelegt wird, welche zwei eine Teilungsebene (4) begrenzende Formplatten (2, 3) aufweist und von der ein durch eine Dichtung (6) begrenzter Abschnitt (5) unter Vakuum die Halterung des zentralen Teils des Gegenstandes bewirkt, die beiden Platten zusammengeführt, der Kunststoff eingespritzt und die beiden Platten nach Polymerisation getrennt und der umgossene Gegenstand aus der Form entnommen wird, dadurch gekennzeichnet, daß das Verfahren auf ein gewölbtes Glas, insbesondere eine Scheibe für Kraftfahrzeuge, angewendet und eine zusätzliche, die Begrenzung der Umgießung bildende Dichtung (10) in den Platten der Form angeordnet wird, welche eine Elastizität in einer im wesentlichen zur Glasscheibe senkrechten Richtung aufweist, um Änderungen der Krümmung der Glasscheibe (1) aufzufangen, jedoch eine ausreichende Steifigkeit aufweist, um den Spritzdruck des Kunststoffes abzufangen.

2. Verfahren nach Anspruch 1, dadurch gekennzeichnet, daß die zusätzliche Dichtung (10) aus zwei zuvor in einer eigenen Form geformten und dann in in den Platten (2, 3) der Form vorgesehenen Aussparungen (3) angeordneten Teilen (11, 12) gebildet ist.

3. Verfahren nach Anspruch 2, dadurch gekennzeichnet, daß die zusätzliche Dichtung (10) durch eine nachgiebige Dichtung mit einer Shore-Härte A zwischen 65 und 95 gebildet ist.

4. Verfahren nach Anspruch 3, dadurch gekennzeichnet, daß die nachgiebige Dichtung aus einem wärmehärtbaren Polyurethan-Elastomer gebildet ist.

5. Verfahren nach Anspruch 4, dadurch gekennzeichnet, daß die Dichtung eine Shore-Härte A von 80 aufweist.

6. Verfahren nach einem der Ansprüche 2 bis 5, dadurch gekennzeichnet, daß der Teil der zusätzlichen Dichtung (10), der aus der Aussparung (13) vorsteht, in welcher die Dichtung in die Form eingesetzt ist, eine Formschräge (17) aufweist.

7. Verfahren nach einem der Ansprüche 2 bis 6, dadurch gekennzeichnet, daß vor dem Pressen der beiden Platten (2, 3) gegen die Glasscheibe (1) ein bestimmtes Spiel zwischen der zusätzlichen nachgiebigen Dichtung (10) und ihrer Aussparung (13) in der Form aufrechterhalten wird.

8. Verfahren nach Anspruch 1 oder 2, dadurch gekennzeichnet, daß die zusätzliche Dichtung (10) aus mit Teflon (21) bedecktem Metall gebildet ist und Federn (22) zwischen der Dichtung und ihrer Aussparung in der Form angeordnet sind.

9. Verfahren nach einem der Ansprüche 2 bis 7, dadurch gekennzeichnet, daß der nachgiebigen Dichtung (11, 12) ein metallischer Einsatz (24) beigefügt ist, welcher auf der mit dem Umgußmaterial in Kontakt befindlichen Seite der Dichtung angeordnet ist.

10. Verfahren nach Anspruch 1, dadurch gekennzeichnet, daß eine Verdickung (23) aus mit Teflon (21) beschichtetem Metall auf einer der Formplatten vorgesehen ist, daß die andere Platte eine nachgiebige Dichtung (11) in einer Aussparung (13) aufweist und daß von der Seite der Dichtung (11) eine größere Schließkraft aufgebracht wird.

11. Vorrichtung zur Durchführung des Verfahrens nach einem der Ansprüche 1 bis 10, mit zwei eine Form bildenden und eine Teilungsebene (4) begrenzenden Platten (2, 3), einer Zwischenzone und einer zentralen Zone (5), wobei die beiden Platten mit Abstand zueinander in ihrer zentralen Zone (5) angeordnet sind, welche mit einer ein Vakuum aufbauenden Einrichtung verbunden sind, und mit einer Dichtung (6), welche eine Abdichtung zwischen der mittleren Zone und der zentralen Zone bildet, dadurch gekennzeichnet, daß die Vorrichtung zur Herstellung von gewölbten Gläsern, insbesondere Glasscheiben für Kraftfahrzeuge vorgesehen ist und daß die Vorrichtung eine zusätzliche, in der Form angeordnete Dichtung (10) aufweist, welche in einer Richtung im wesentlichen senkrecht zur Glasscheibe ausreichend elastisch ist, um eventuelle Veränderungen der Form der Verglasung aufzufangen, und ausreichend steif ist, um die Begrenzung für das Umgießen zu bilden und den Spritzdruck des Kunststoffes ohne Gefahr eines Verkratzens oder des Bruchs der Scheibe aufzufangen.

12. Gewölbte umgossene Verglasungen, hergestellt nach dem Verfahren nach einem der Ansprüche 1 bis 10 oder mit Hilfe der Vorrichtung nach Anspruch 11.

## Claims

1. A method of moulding on to an object, by injection of polymerisable plastics material under pressure, on to at least a part of the periphery of the object, in which the object is placed in a mould comprising two plates (2, 3) defining a plane of a joint (4) and of which a part (5) under vacuum limited by a gas-tight joint (6) allows holding of the centre part of the object, the two plates are brought together and the plastics material is injected, and after polymerisation the plates are separated and the plate with the moulding is withdrawn from the mould, characterised in that the method is applied to a curved pane (1), notably for automobile vehicles, the limit of moulding is defined by a supplementary joint (10), said supplementary joint being positioned in the plates of the mould and having an elasticity in a direction substantially perpendicular to the pane to absorb variations of the curvature of said pane (1), while having a rigidity sufficient to withstand the injection pressure of the plastics material.

2. Method according to claim 1, characterised in that the supplementary joint (10) is a joint in two parts (11, 12) previously moulded in a different mould then placed in spaces (13) provided for this purpose in the plates (2, 3) of the mould.

3. Method according to claim 2, characterised in that the supplementary joint (10) is a flexible joint having a Shore hardness (A) from 65 to 95.

4. Method according to claim 3, characterised in that the flexible joint is of a thermosetting polyurethane elastomer.

5. Method according to claim 4, characterised in that the flexible joint has a Shore A hardness of 80.

6. Method according to one of claims 2 to 5, characterised in that the part of the supplementary joint (10) which extends from the space in which the joint is placed in the mould has a taper (17).

7. Method according to one of claims 2 to 6, characterised in that, before pressing of the two plates (2, 3) against the pane (1), a play between the supplementary flexible joint (10) and its space (13) in the mould is maintained.

8. Method according to claim 1 or 2, characterised in that the supplementary joint (10) is of metal covered with teflon (21), and in that springs (22) are interposed between said joint and its space in the mould.

9. Method according to one of claims 2 to 7, characterised in that the flexible joint (11, 12) is provided with a metal insert (24) arranged on the side of the joint in contact with the moulding material.

10. Method according to claim 1, characterised in that an increased thickness of metal (23) covered with teflon (21) is deposited on one of the plates of the mould, the other plate comprising a flexible joint (11) in a space (13) and a greater clamping force is exercised on the side of the joint (11).

11. Device for carrying out a method according to one of claims 1 to 10, comprising two plates (2, 3) forming a mould and defining a plane of the joint (4), an intermediate zone and a centre zone (5), the two plates being spaced from each other in their centre zone (5) connected to an associated system for providing a vacuum, a joint (6) for ensuring air-tightness between the intermediate zone and the centre zone, characterised in that the device is provided for manufacture of curved panes, notably for automobile vehicles, and it comprises a supplementary joint (10) placed in the mould, sufficiently elastic in a direction substantially perpendicular to the pane to absorb possible variations in shape of the pane, and sufficiently rigid to define the limit of moulding and withstand the pressure of injection of the plastics material, without risk of scratching or breakage of the pane.

12. Curved panes having mouldings obtained by carrying out a method according to any one of claims 1 to 10 or by means of a device according to claim 11.

Fig . 1

Fig. 2

Fig. 3

Fig. 4

Fig. 5

Fig. 6

Fig. 7

Fig. 9

Fig. 8